Europäisches Patentamt

European Patent Office

Office européen des brevets

(19)

(11) **EP 1 306 862 A1**

(12) **EUROPÄISCHE PATENTANMELDUNG**

(43) Veröffentlichungstag:
02.05.2003 Patentblatt 2003/18

(51) Int Cl.⁷: **H01G 4/008**, H01G 4/012

(21) Anmeldenummer: 01811034.6

(22) Anmeldetag: **23.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Carlen, Martin**
**5443 Niederrohrdorf (CH)**

• **Ohler, Christian**
**5400 Baden (CH)**
• **Rhyner, Jakob**
**8006 Zürich (CH)**

(74) Vertreter: **ABB Patent Attorneys**
**c/o ABB Schweiz AG**
**Brown Boveri Strasse 6**
**5400 Baden (CH)**

(54) **Folie für einen Folienkondensator und Folienkondensator**

(57)     Folienkondensatoren weisen eine dünne Trägerfolie (1) als Dielektrikum auf. Die Oberflächen der Trägerfolien sind mit als Elektroden dienenden Leiterschichten (2) aus Metall oder aus einem nichtmetallischen Leiter versehen. Wenn der Kondensator im Betrieb aufgeladen wird, können an den Kanten der Leiterschichten (2) elektrische Felder mit grossen Feldstärken entstehen, was zu Durchschlägen führen kann. Die Erfindung zeichnet sich im Wesentlichen dadurch aus, dass an den Rändern der Elektroden bildenden Leiterschicht (2) eine Randzonenbeschichtung (3) vorhanden ist, welche sich in den für Änderungen der angelegten Spannung massgeblichen Zeitspannen - beispielsweise der Wechselstrom-Periode - nur teilweise auflädt. Dazu muss die Randzonenbeschichtung der Folie eine Oberflächenleitfähigkeit haben, welche kleiner ist als die Oberflächenleitfähigkeit der Leiterschicht. Die lediglich teilweise Aufladung der Randzonenbeschichtung führt dazu, dass der Potentialverlauf kaum Unstetigkeiten aufweist und damit grosse Feldstärkenüberhöhungen vermieden werden können.

Fig. 1b

EP 1 306 862 A1

## Beschreibung

## Technisches Gebiet

Die vorliegende Erfindung bezieht sich auf eine Folie für einen Folienkondensator nach dem Oberbegriff des Anspruchs 1 sowie auf einen Folienkondensator und ein Verfahren zum Herstellen einer Folie für einen Folienkondensator.

## Stand der Technik

Die Erfindung betrifft Folienkondensatoren. Zusätzlich kann sie auch für andere Elemente der Elektrotechnik verwendet werden, zum Beispiel für Durchführungen von Transformatoren oder Schaltern und Isolationssystemen von Kabeln und Kabelendverschlüssen, sowie auch für keramische oder andere Kondensatoren. Im Speziellen betrifft sie die Fragestellung der Vermeidung von grossen elektrischen Feldstärken an Elektrodenkanten.

Folienkondensatoren weisen eine dünne Kunststoffolie als Dielektrikum auf. Die Folienoberflächen sind mit als Elektroden dienenden Beschichtungen aus Metall oder aus einem nichtmetallischen Leiter versehen. Meist sind die Leiterschichten im Vakuum aufgebrachte Al- oder Zn-Legierungen. Sie weisen Dikken im Bereich von 10-20 nm auf, wodurch bei lokalen elektrischen Durchschlägen Selbstheilung eintreten kann.

Aus dem Stand der Technik sind segmentierte Metallbeschichtungen bekannt. Die einzelnen Segmente der Metallbeschichtung sind durch grabenartige Aussparungen voneinander getrennt. Die Segmente sind verbunden durch Leiterbrücken mit einem kleinen Querschnitt. Diese Leiterbrücken dienen als Sicherungen, welche bei einem elektrischen Durchschlag das betroffene Segment von den übrigen Segmenten trennen. Wenn sich ein lokaler Durchschlag ereignet, ist die am Ort des Durchschlags freigesetzte Leistung durch die Sicherungen limitiert, wodurch ein grösserer Schaden vermieden werden kann.

Ebenfalls bekannt sind Vielfachschichten von Kondensatorfolien für interne Serieschaltungen, umfassend Elektroden mit als auch ohne Segmentierung . Die Elektroden haben Zonen mit hohem elektrischem Widerstand, wo die Kapazität erzeugt wird, und Zonen mit geringem elektrischem Widerstand an den Orten der Verbindungsflächen.

Die Elektrodendicke bei diesen Folienkondensatoren gemäss dem Stand der Technik beträgt nur einige Nanometer oder einige Dutzend Nanometer. Daher hat die Elektrode eine sehr scharfe Kante. Bei dieser Elektrodendicke ist es nicht möglich, die Kante abzurunden und durch einen entsprechend gewählten Kurvenradius der Kante die Feldstärke des elektrischen Felds zu vemindern. An der Kante hat das elektrische Feld also eine grosse Feldstärke und es kann sein, dass ein Strom in die Folie iniziiert wird und sich ein Durchschlag ereignet.

Bei Gleichstromkondensatoren besteht das Problem der erhöhten Feldstärke an den Kanten vor allem während einer kurzen Zeit nach dem Aufladen des Kondensators und während Änderungen der angelegten Spannung. Wenn die Spannung konstant gehalten wird, bildet sich eine Raumladung aus und kompensiert das erhöhte Feld. Für Wechselstromkondensatoren ergibt sich keine solche Kompensation, oder sie ist viel langsamer aufgrund der sich periodisch ändernden Polarität. Daher ist die Feldstärkenüberhöhung an den Kanten bei Wechselstromkondensatoren ein viel grösseres Problem.

Die EP 880153 beschreibt eine metallisierte Kondensatorfolie mit einer Metallschichtzone mit einem Flächenwiderstand von 1-15 $\Omega$ und eine Randzone mit gegen den Rand kontinuierlich abnehmender Metallisierungsdicke. Die Randzone verhindert das Vorhandensein einer scharfen Kante und trägt dazu bei, einen elektrischen Durchschlag an der Kante der Metallschicht zu vermeiden. Die Metallisierung der Randzone wird durch einen Vakuum-Abscheidungsprozess aufgetragen, wobei die entsprechende Fläche zuerst mit einem Ölfilm überzogen wird. Zum Imprägnieren wird dasselbe oder ein passendes anderes Öl verwendet, beispielsweise Silikonöl.

Eine solche Randzone mit kontinuierlich abnehmender Metallisierungsdicke ist aufgrund ihrer kleinen Breite von ca. 0.02-1 mm schwierig herzustellen. Dies gilt insbesondere, wenn die Kondensatorfolie eine grosse Ausdehnung besitzt. Wenn die Metallisierungen dünn sind, ist eine kontinuierliche Schicht nicht möglich, da sich bei zu kleinen Dicken Metallinseln bilden.

## Darstellung der Erfindung

Es ist eine Aufgabe der Erfindung, eine Folie für einen Folienkondensator oder für eine anderes kapazitives Element zur Verfügung zu stellen, welche auch bei verhältnismässig hohen angelegten Spannungen nicht zu Durchschlägen neigt, und welche nicht zu schleichenden Entladungen oder zur elektrochemischen Erosion an Elektrodenkanten neigt.

Diese Aufgabe wird gelöst durch eine Folie, wie sie im Anspruch 1 definiert ist.

Ebenfalls Gegenstand der Erfindung ist ein Kondensator gemäss Anspruch 9 und ein Verfahren nach Anspruch 12.

Vorteilhafte Ausgestaltungen der Folie sowie des Kondensators und des Herstellungsverfahrens gehen aus den abhängigen Ansprüchen hervor.

Die Erfindung zeichnet sich im Wesentlichen dadurch aus, dass an den Rändern der die Elektroden bildenden Leiterschicht eine Randzonenbeschichtung vorhanden ist, welche sich in den für Änderungen der angelegten Spannung massgeblichen Zeitspannen - beispielsweise der Wechselstrom-Periode - nur teilweise auflädt. Dazu muss die Randzonenbeschichtung der Folie eine Flächenleitfähigkeit haben, welche kleiner ist als die Flächenleitfähigkeit der Leiterschicht. Die lediglich teilweise Aufladung der Randzonenbeschichtung führt dazu, dass der Potentialverlauf kaum Unstetigkeiten aufweist und damit grosse Feldstärkenüberhöhungen vermieden werden können. Die Randzone kann als Feldstärkegradientenzone betrachtet werden.

Die Randzonenbeschichtung wird nur teilweise aufgeladen, wenn sich die Kondensatorspannung innert einer charakteristischen Zeitspanne ändert. Demgemäss ist der Widerstand der Zone an die charakteristische Frequenz der Änderung angepasst.

Wenn der Widerstand zu hoch wäre, würde die Randzone nicht aufgeladen, und die Feldstärkenüberhöhung am Rand der Metallisierung würde bleiben. Wenn andererseits der Widerstand zu klein wäre, würde die Randzone vollständig aufgeladen werden und das Problem der Feldstärkenüberhöhung würde lediglich an den Rand der Randzone transferiert werden.

Ein wichtiger Parameter ist also die RC-Zeit der Elektrode (das heisst das Produkt $\tau=R*C$, wenn R einen charakteristischen Widerstand und C die Kapazität darstellt). Die RC-Zeit soll lokal variieren und an den Elektrodenkanten - das heisst in der Randzonenbeschichtung - viel grösser sein als im Zentrum der Elektrode oder der Segmente. Gemäss bevorzugten Ausführungsformen der Erfindung wird die RC-Zeit um mehrere Grössenordnungen variiert. Der spezifische Widerstand im Bereich der Elektrodenkante sollte sich im Bereich von $\rho=4*10^{-3}$ bis $1*10^6$ $\Omega*cm$ bewegen.

Der übliche Flächenwiderstand einer selbstheilenden Kondensatorelektrode ist von der Grössenordnung $R_S=5\text{-}20$ $\Omega$. Im Optimalfall ist er so gewählt, dass die Verluste der Elektrode höchstens gleich viel zum Total der Verluste beiträgt wie der Verlustfaktor des Dielektrikums ($\tan(\delta)= 10^{-4}$ bis $10^{-2}$ für die meisten polymerischen Kondensatorfolien), so dass die Elektrode wenig zum Totalverlust beiträgt. Daraus folgt, dass der Flächenwiderstand im Bereich $R_S=1\text{-}100$ $\Omega$ ist. Dieser Bereich ergibt sich auch aus praktischen Gründen. Dickere Metallisierungen (entsprechend kleineren Widerständen) führen zu Schwierigkeiten beim Selbstheilungsprozess.

Grössere Flächen mit dünneren Metallisierungen sind schwierig in guter Qualität zu realisieren, da sich oft nicht verbundene Metallinseln bilden.

Die RC-Zeit eines Kondensators mit einer metallisierten, ca. 10 µm dicken Polypropylenfolie (Kapazität: 0.2 nF/cm$^2$) und einem Flächenwiderstand von $R_S=10$ $\Omega$ ist $\tau=2*10^{-9}$s. Daher wird innerhalb eines 50 Hz-Zyklus die ganze Kondensatorelektrode vollständig geladen und entladen; auch die Elektrodenkante wird auf dem Elektrodenpotential sein. Da die Elektrodendicke nur einige Nanometer oder einige Dutzend Nanometer beträgt, hat die Elektrode eine sehr scharfe Kante. Daher sind die Feldstärken an der Kante sehr hoch.

Gemäss bevorzugten Ausführungsformen der Erfindung ist aber die RC-Zeit in der Randzone von derselben Grössenordnung wie die Periode der angelegten Wechselspannung bzw. der charakteristischen Zeit einer Änderung der Kondensatorspannung. In diesem Fall zeigt die Randzone nämlich einen graduellen Potentialverlauf; das Potential nähert sich zur Kante hin seinem zeitlichen Durchschnittswert. Diese Bedingung definiert zusammen mit der Breite der Kontaktzone den gewünschten Flächenwiderstand. Es gilt also sinnvollerweise:

$$RC=R_S*(b/l)*C_S*(b*l)= R_S*C_S*b^2 \approx T=1/f$$

wenn $C_S$ die Kapazität pro Flächeneinheit, $R_S$ der Flächenwiderstand, $T = 1/f$ (f=Frequenz) die Periode der Änderung der Kondensatorspannung und b die Breite der Randzonenbeschichtung und 1 die willkürlich ausgewählte Länge eines Ranzonenbeschichtungsstreifens ist. Bei DC-Kondensatoren tritt die Dauer eines Spannungstransienten an die Stelle der Periode T.

Für eine geeignete Wahl der Breite der Randzone können zwei Limiten angegeben werden. Als untere Limite kann die Dicke der dielektrischen Folie betrachtet werden, also b$\geq$ca. 10 µm, während praktischerweise auch b<5 mm gilt.

Auch für die Dicke h der Randzonenbeschichtung ergeben sich in der Praxis Grenzwerte. Das Minimum ist 1 nm, da dünnere Schichten kaum mehr zusammenhängend herstellbar sind. Es ist also keineswegs eine über die Randzonenbreite kontinuierlich bis auf Null abnehmende Schichtdickenvariation gefordert. Eine diskontinuierliche oder stufenweise Schichtdickenvariation ist erfindungsgemäss ausreichend, wobei bevorzugt nur eine Stufe ausgebildet ist und somit von einer eindeutigen, homogenen Schichtdicke h gesprochen werden kann. Die maximale Dicke ist ca. 1 µm, da dickere Beschichtungen Probleme beim Wickeln des Kondensators bewirken, sowie die Selbstheilungsfähigkeit und die Energiedichte des Kondensators beeinträchtigen.

Ein Hauptvorteil der Erfindung liegt darin, dass elektrisch nichtleitende oder freie Bereiche, welche die Elektroden umgeben und elektrisch isolieren, kleiner, d. h. weniger breit ausgebildet werden können. Dadurch kann wiederum bei gleichbleibender Folienfläche die Elektrodenfläche vergrössert werden.

**Kurze Beschreibung der Zeichnungen**

Im Folgenden wird die Erfindung anhand von Ausführungsbeispielen und mit Bezug auf sehr schematische Zeichnungen noch näher erläutert. In den Zeichnungen zeigen:

-    Fig. 1 a und 1b je eine einseitig beschichtete Folie im Querschnitt,

- Fig. 2 eine Draufsicht auf eine Folie

- Fig. 3 den Potentialverlauf in der Folienbeschichtung

- Fig. 4 eine Draufsicht auf eine weitere Folie

- Fig. 5a und 5b Schichten eines Mehrfachschicht-Folienkondensators in Draufsicht und im Querschnitt.

**Wege zur Ausführung der Erfindung**

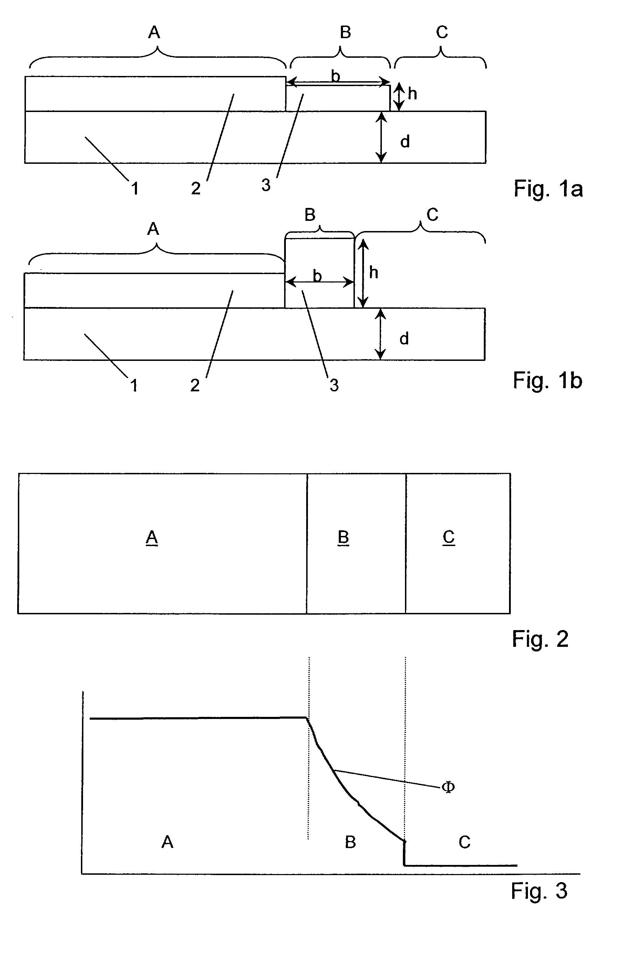

Die Figuren 1a und 1b zeigen schematisch einen Querschnitt durch eine erfindungsgemässe Folie für einen Folienkondensator. Eine Trägerfolie 1 dient als mechanischer Träger und ist elektrisch isolierend und dielektrisch. Sie besteht aus einem Kunststoff, beispielsweise einem Polymer wie Polyethylen, Polystyrol, Polypropylen, Polykarbonat, PET, PEN, Celluloseacetat, Polyester, einem Epoxydharz, einem Polysulfon, oder einem anderen Kunststoff oder aus Papier und ist und ca. 2-30 μm dünn. Eine darauf aufgebrachte Leiterschicht 2 ist als Metallschicht oder als leitender Kunststoff ausgebildet. Die Leiterschicht 2 bedeckt die eine Oberfläche der Trägerfolie 1 nicht vollständig, so dass ein freier Rand besteht. In den Figuren 1a und 1b sind genauso wie in den folgenden Figuren die Bereiche, in die die Folienoberfläche durch verschiedene Beschichtungen unterteilt wird, mit Grossbuchstaben bezeichnet. Bereiche der Oberfläche, in welchen die Trägerfolie 1 mit der Leiterschicht 2 versehen ist, werden mit A bezeichnet, Bereiche in denen sie frei von einer Beschichtung ist - die freien Bereiche - mit C. Zwischen den Bereichen A der Leiterschicht 2 und den freien Bereichen C befindet sich eine Randzone B, wo die Trägerfolie mit einer Randzonenbeschichtung 3 versehen ist.

Die Randzonenbeschichtung 3 ist aus einem Material mit einer verhältnismässig kleinen elektrischen Leitfähigkeit gefertigt. Ihre Breite b beträgt zwischen 10 μm und 5 mm, vorzugsweise zwischen 100 μm und 2 mm. Die Dicke h der Randzonenbeschichtung 3 kann kleiner oder grösser sein als die Dicke der Leiterschicht 2. In den Figuren 1a und 1b sind ist je ein Beispiel einer Randzonenbeschichtung die dicker ist und einer die dünner ist als die Leiterschicht 2 dargestellt.

Das Material der Randzonenbeschichtung 3 kann alternativ zur gezeichneten Anordnung zusätzlich zur Randzone B auch die Leiterschicht 2 ganz oder teilweise bedecken. Weiter kann die Randzonenbeschichtung auch so breit gewählt werden, dass das Material der Randzonenbeschichtung die ursprünglichen freien Bereiche ganz überdeckt, d.h. dass mindestens bereichsweise gar kein freier Bereich mehr vorhanden ist, aber die Leitfähigkeit der Randzonenbeschichtung so gewählt ist, dass sich die Ladung innerhalb einer Halbperiode nicht über die ganze Breite ausdehnen kann.

In der Figur 2 ist ein Ausschnitt aus einer erfindungsgemässe Folie in mit dem von der Leiterschicht bedeckten Bereich A, der Randzone B und dem freien Bereich C in Draufsicht dargestellt.

Die Randzonenbeschichtung soll während eines Wechselstrom-Zyklus teilweise aber nicht vollständig aufgeladen werden. Damit soll erwirkt werden, dass der Potentialverlauf von der Kante der Leiterschicht 1 zum Rand hin mehr oder weniger stetig verläuft, womit grosse elektrische Feldstärken vermieden werden können. Damit ergibt sich, dass die RC-Zeit der Randzonenbeschichtung von derselben Grössenordnung sein muss wie die Periode T = 1/f (f=Frequenz) der Wechselspannung. Bei DC-Kondensatoren tritt in der folgenden Diskussion die Dauer einer Spannungstransienten an die Stelle der Periode T. Es ergibt sich also

$$RC=R_S*(b/l)*C_S*(b*l)= R_S*C_S*b^2 \approx T=1/f$$

wenn $C_S$ die Kapazität pro Flächeneinheit, $R_S$ der Flächenwiderstand und 1 die willkürlich ausgewählte Länge eines Randzonenbeschichtungsstreifens ist.

Daraus ergibt sich für den spezifischen Widerstand der Randzonenbeschichtung:

$$\rho=h* R_S \approx h/(f* b^2* C_S)=h*d/(f*b^2*\varepsilon*\varepsilon_0)$$

wenn d die Dicke der dielektrischen Trägerfolie und ε ihre Dielektrizitätskonstante ist. Damit ergibt sich durch Einsetzen des Wertes von $1/\varepsilon_0$ ($10^{13}$ Vcm/As) und unter Lockerung der vorgehend strikt befolgten Beziehung RC=1/f eine realistische Bedingung für den Randzonenwiderstand bei vorgegebener Geometrie:

$$\rho=[1*10^{12}... 1*10^{16}] *(h*d)/(f*b^2*\varepsilon) (\Omega*cm),$$

wenn die Frequenz f in Hz angegeben wird. Vorzugsweise wird

$$\rho=[3*10^{12}... 1*10^{15}] *(h*d)/(f*b^2*\varepsilon) (\Omega*cm).$$

gewählt. Gemäss einem besonders bevorzugten Beispiel gilt

$$\rho=[7*10^{12}... 1*10^{14}] *(h*d)/(f*b^2*\varepsilon) (\Omega*cm).$$

Für den Flächenwiderstand $R_S=\rho/h$ gelten analoge Beziehungen, also vorzugsweise

$$R_S =[3*10^{12}... 1*10^{15}] *d/(f*b^2*\varepsilon) (\Omega).$$

Wenn die vorstehend erwähnten üblichen Abmessungen der Randzonenbeschichtung berücksichtigt werden, ergibt sich beispielsweise

$$\rho=[4*10^{6}...\ 1*10^{17}]d)/(f*\varepsilon)(\Omega*cm)$$

(d in cm).

Wenn der Folienkondensator mit 50 Hz betrieben wird erhält man vorzugsweise:

$$\rho=[6*10^{10}...\ 2*10^{13}]*(h*d)/(b^{2}*\varepsilon)\ (\Omega*cm)$$

bzw.:

$$\rho=[2*10^{4}\ ...\ 2*10^{15}]\ d/\varepsilon\ (\Omega*cm)$$

Wenn die obigen Bedingungen an den spezifischen Widerstand und die Abmessungen der Randzonenbeschichtung erfüllt sind, so nimmt das Potential Φ des voll aufgeladenen Kondensators im Innern der Randzone B in Funktion des Abstands zur Leiterschicht stetig ab (bzw. zu), wie das in der Figur 3 dargestellt ist. Dabei ist es ausreichend, falls das Potential innerhalb der Randzone auf einen Bruchteil, vorzugsweise höchstens einen Drittel, seines Wertes innerhalb der Leiterschicht abgeschwächt wird. Mit Ausname des erwähnten Falles eines fehlenden freien Bereiches ist nämlich keinesfalls eine Reduktion des Potentials bis auf Null innerhalb der Randzone zwingend nötig.

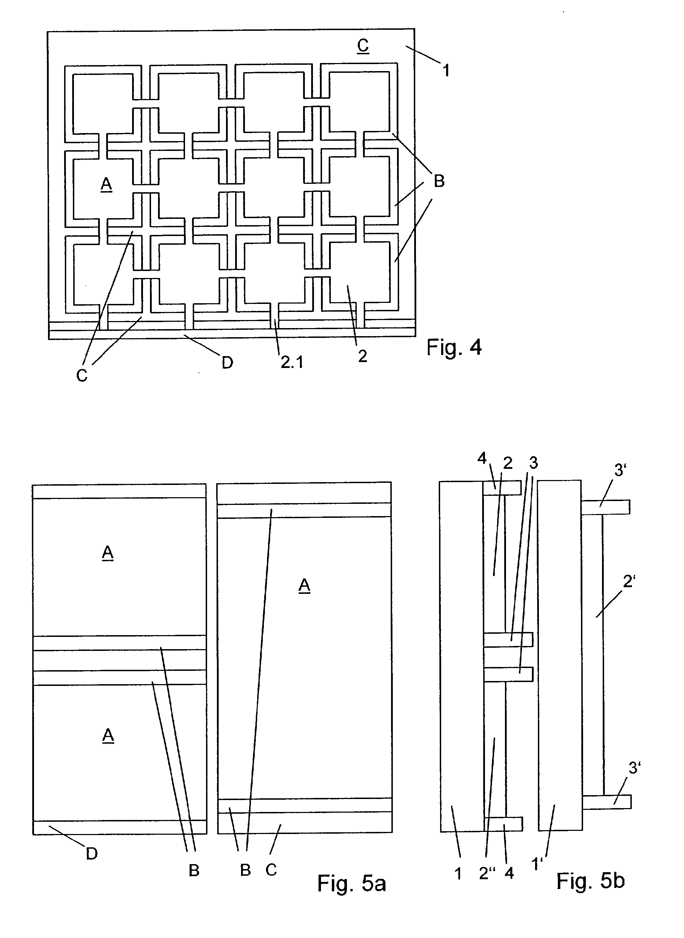

In der Figur 4 ist eine segmentierte Kondensatorfolie gezeigt. Die Leiterschicht 2 besitzt eine Vielzahl von Segmenten, welche durch Leiterbrücken 2.1 verbunden sind. Dazwischen sowie am Rand der Folie erstrecken sich freie Bereiche (Bereich C). Zwischen der Leiterschicht 2 (entsprechend dem Bereich A) und dem Bereich C befinden sich erfindungsgemässe Randzonen B. In der Figur ist noch ein Bereich D dargestellt, in welchem eine Kantenverstärkung vorhanden ist.

Die Figuren 5a und 5b zeigen Folien eines Folienkondensators mit interner Serieschaltung. Eine solche interne Serieschaltung kann auf einfache Art bewirkt werden, indem eine Leiterschicht einer Folie zwei elektrisch nicht direkt miteinander verbundenen Leiterschichten einer zweiten Folie gegenüber liegt. In der Figur sind zwei Folien mit je einer Trägerfolie 1, 1' gezeigt. Die zwischen einer ersten Leiter-Teilschicht 2 der ersten Folie und einer Leiterschicht 2' der zweiten Folienschicht ausgebildete Kapazität ist mit der zwischen der Leiterschicht 2' der zweiten Folie und einer zweiten Leiter-Teilschicht 2" der ersten Folie ausgebildeten Kapazität in Serie geschaltet. Nebst den die Randzone bildenden Randzonenbeschichtungen 3, 3' sind in der Figur auch noch Kantenverstärkungen 4 gezeichnet. Je nach Aufbau des Kondensators (Wickelung etc.) können die beiden Folien auch Teilstücke einer einzigen Folie sein.

Die Randzonenbeschichtung kann auf verschiedene Arten erzeugt werden. Gemäss einer ersten Variante kann eine Legierung mit einer reduzierten elektrischen Leitfähigkeit oder ein Halbleiter gezielt an den Rändern der Leiterschicht auf die Trägerfolie aufgebracht werden. Dies geschieht mit Verfahren, wie sie an sich schon für das Auftragen von Zehntelmillimeter oder Millimeter breiten Streifen bekannt sind (beispielsweise aus der Herstellung von Kondensatorfolien, oder auch Leiterplatten etc.), beispielsweise mit Hilfe einer Maske, mit Hilfe von photolithografischen Verfahren, etc. Auch eine Karbonbeschichtung oder eine Polymerbeschichtung kann aufgebracht werden. Schliesslich kann die Randzonenbeschichtung auch durch eine leitfähige Flüssigkeit (Öl, Tinte etc.) gebildet werden, welche beispielsweise anschliessend noch durch einen Gel bildenden Prozess mechanisch fest gemacht werden kann.

Eine weitere Variante sieht das beabsichtigte Verschlechtern von Leitereigenschaften der Leiterschicht an deren Rändern vor. Dies geschieht beispielsweise chemisch durch gezieltes Exponieren der entsprechenden Bereiche B an einer reaktiven Atmosphäre (Oxidieren etc.), durch Plasmabehandlung etc. Es kann aber auch mechanisch oder durch Aufheizen mit einem Laser bewirkt werden etc.

Gemäss noch einer Variante wird die frei liegende Oberfläche der Trägerfolie leitfähig gemacht, beispielsweise durch Oberflächenkarbonisierung durch Laserpyrolyse etc.

Innerhalb der Leiterschicht kann eine Strompfadstrukur verlaufen (in den Zeichnungen nicht dargestellt), wie sie beispielsweise in der deutschen Offenlegungsschrift DE 198 56 457 beschrieben ist.

## Patentansprüche

1. Folie für einen Folienkondensator oder ein anderes Element der Elektrotechnik mit einer dielektrischen Trägerfolie (1, 1') und mindestens einer darauf aufgebrachten Leiterschicht (2, 2'), wobei die Leiterschicht (2, 2') die Trägerfolie (1, 1') nicht vollständig bedeckt, **dadurch gekennzeichnet, dass** angrenzend an die Leiterschicht (1, 1') mindestens bereichsweise eine Randzone (B) vorhanden ist, in welcher die Trägerfolie (1, 1') mit einer Randzonenbeschichtung (3) aus einem elektrisch leitenden Material versehen ist, wobei in der Randzone (B) der Flächenwiderstand grösser ist als der Flächenwiderstand der Leiterschicht (1, 1').

2. Folie nach Anspruch 1, **dadurch gekennzeichnet, dass** die Dicke der Randzonenbeschichtung (3) diskontinuierlich auf Null abnimmt.

3. Folie nach Anspruch 2, **dadurch gekennzeichnet, dass** die Randzonenbeschichtung (3) eine im Wesentlichen homogene Dicke aufweist.

**4.** Folie nach einem der Ansprüche 1 bis 3, **dadurch gekennzeichnet, dass** die Randzonenbeschichtung (3) aus mindestens teilweise oxidiertem, plasmabehandeltem, mechanisch beschädigtem oder durch einen Lichtstrahl erhitztem Material der Leiterschicht (2) besteht.

**5.** Folie nach einem der Ansprüche 1 bis 3, **dadurch gekennzeichnet, dass** die Randzonenbeschichtung (3) aus einer metallischen Legierung mit einer niedrigen Leitfähigkeit, aus einem Halbleitermaterial, aus einer Graphit- oder kohleartigen Beschichtung oder aus einem leitenden Polymer besteht.

**6.** Folie nach einem der Ansprüche 1 bis 3, **dadurch gekennzeichnet, dass** die Randzonenbeschichtung (3) aus einem leitfähigen Öl oder einer leitfähigen Tinte besteht, wobei das Öl oder die Tinte vorzugsweise durch einen Gelbildungsprozess fixiert ist.

**7.** Folie nach einem der Ansprüche 1 bis 3, **dadurch gekennzeichnet, dass** die Randzonenbeschichtung (3) aus einer beispielsweise durch Laser-Pyrolyse modifizierten Oberflächenschicht der dielektrischen Folie besteht.

**8.** Folie nach einem der vorhergehenden Ansprüche, **dadurch gekennzeichnet, dass** das Material der Randzonenbeschichtung die Leiterschicht (2) ganz oder teilweise bedeckt oder die nicht von der Leiterschicht bedeckten Bereiche (C) bedeckt.

**9.** Folienkondensator mit Elektroden und einem zwischen den Elektroden angeordneten Dielektrikum, **dadurch gekennzeichnet, dass** mindestens eine Elektrode sowie das Dielektrikum durch eine Folie nach einem der Ansprüche 1 bis 8 ausgebildet ist.

**10.** Folienkondensator nach Anspruch 9, **dadurch gekennzeichnet, dass** er als Wechselstromkondensator für Wechselstrom mit einer mittleren Wechselstromfrequenz f ausgebildet ist, und dass das Produkt des elektrischen Widerstandes R der Randzonenbeschichtung mit der lokalen Kapazität C von derselben Grössenordnung ist wie das Inverse der Wechselstromfrequenz.

**11.** Folienkondensator nach Anspruch 10, **dadurch gekennzeichnet, dass** für den Flächenwiderstand $R_s$ in $\Omega$ der Randzonenbeschichtung gilt $10^{12}*d/(f*b^2*\varepsilon) < R_s < 10^{16}*d/(f*b^2*\varepsilon)$, wenn d die Dicke der dielektrischen Folie in cm, b die Breite und h die Dikke der Randzonenbeschichtung in cm und $\varepsilon$ die Dielektrizitätskonstante der dielektrischen Folie ist und die Frequenz f in Hz angegeben wird.

**12.** Verfahren zur Herstellung einer Folie für einen Folienkondensator, wobei eine dielektrische Trägerfolie (1, 1') bereitgestellt und mit einer teilweisende bedeckenden Leiterschicht (2, 2', 2") versehen wird, **dadurch gekennzeichnet, dass** am Rand der von der Leiterschicht bedeckten Bereichen (A) die Trägerfolie (1, 1') mit einer Randzonenbeschichtung (3) aus einem elektrisch leitenden Material versehen wird, wobei der Flächenwiderstand der Randzonenbeschichtung (3) grösser ist als der Flächenwiderstand der Leiterschicht (1, 1').

**13.** Verfahren nach Anspruch 12, **dadurch gekennzeichnet, dass** als Randzonenbeschichtung (3) ein elektrisch schwach leitendes Material nach dem Aufbringen der Leiterschicht (2) gezielt an den Rändern der Leiterschicht (2) aufgetragen wird.

**14.** Verfahren nach Anspruch 13, **dadurch gekennzeichnet, dass** die Randzonenbeschichtung erzeugt wird, indem die Leitfähigkeit der Leiterschicht (2) in einem Bereich (B) an deren Rändern durch chemische oder mechanische Methoden vermindert wird.

**15.** Verfahren nach Anspruch 14, **dadurch gekennzeichnet, dass** die Randzonenbeschichtung erzeugt wird, indem in einem an die Ränder der Leiterschicht (2) anschliessenden Bereich (B) die Oberfläche der Trägerfolie beispielsweise durch Oberflächenkarbonisierung leitfähig gemacht wird.

Fig. 1a

Fig. 1b

Fig. 2

Fig. 3

Fig. 4

Fig. 5a

Fig. 5b

**Europäisches Patentamt**

# EUROPÄISCHER RECHERCHENBERICHT

Nummer der Anmeldung

EP 01 81 1034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | EP 0 880 153 A (TORAY INDUSTRIES) 25. November 1998 (1998-11-25) * Zusammenfassung * * Abbildung 1 * --- | 1,6,9,12 | H01G4/008 H01G4/012 |
| X | EP 0 088 137 A (STEINER KG) 14. September 1983 (1983-09-14) * Seite 5, Zeile 7 - Zeile 23 * * Abbildung 1 * --- | 1-3,9,12 | |
| X | DE 695 341 C (BOSCH GMBH ROBERT) 22. August 1940 (1940-08-22) * Seite 2, Zeile 18 - Zeile 29 * * Abbildung * --- | 1,5,8,9, 12,13 | |
| A | US 6 222 721 B1 (VETTER HARALD) 24. April 2001 (2001-04-24) * Abbildung 1 * ----- | 1,5 | |
| | | | **RECHERCHIERTE SACHGEBIETE (Int.Cl.7)** H01G |

Der vorliegende Recherchenbericht wurde für alle Patentansprüche erstellt

| Recherchenort | Abschlußdatum der Recherche | Prüfer |
|---|---|---|
| DEN HAAG | 22. April 2002 | Goossens, A |

**ANHANG ZUM EUROPÄISCHEN RECHERCHENBERICHT
ÜBER DIE EUROPÄISCHE PATENTANMELDUNG NR.**

EP 01 81 1034

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0880153 | A | 25-11-1998 | JP | 10303056 A | 13-11-1998 |
| | | | CN | 1208940 A | 24-02-1999 |
| | | | DE | 69800198 D1 | 10-08-2000 |
| | | | DE | 69800198 T2 | 14-12-2000 |
| | | | EP | 0880153 A1 | 25-11-1998 |
| | | | SG | 75839 A1 | 24-10-2000 |
| | | | TW | 422888 B | 21-02-2001 |
| | | | US | 6018454 A | 25-01-2000 |
| EP 0088137 | A | 14-09-1983 | EP | 0088137 A1 | 14-09-1983 |
| | | | AT | 23001 T | 15-11-1986 |
| | | | DE | 3273861 D1 | 20-11-1986 |
| | | | US | 4477858 A | 16-10-1984 |
| DE 695341 | C | 22-08-1940 | KEINE | | |
| US 6222721 | B1 | 24-04-2001 | DE | 19639877 A1 | 02-04-1998 |
| | | | AT | 193151 T | 15-06-2000 |
| | | | BR | 9712150 A | 31-08-1999 |
| | | | WO | 9813839 A1 | 02-04-1998 |
| | | | DE | 59701737 D1 | 21-06-2000 |
| | | | EP | 0931325 A1 | 28-07-1999 |
| | | | JP | 2001501031 T | 23-01-2001 |

EPO FORM P0461

Für nähere Einzelheiten zu diesem Anhang : siehe Amtsblatt des Europäischen Patentamts, Nr.12/82